# EUROPEAN PATENT APPLICATION

(11) **EP 3 203 547 A1**
(43) Date of publication of application: **09.08.2017**
(21) Application number: 15845877.8
(22) Date of filing: 30.09.2015
(51) Int. Cl.: H01M 4/13, H01M 4/62

(54) **ELECTRODE FOR LITHIUM BATTERIES, LITHIUM BATTERY AND PASTE FOR ELECTROCHEMICAL CELLS**

(30) Priority: 30.09.2014 JP 2014201777
(71) Applicant: Mitsui Chemicals, Inc., Minato-ku Tokyo 105-7122 (JP)
(72) Inventor: ZHANG, Han, Sodegaura-shi Chiba 299-0265 (JP); KOISO, Ayumi, Sodegaura-shi Chiba 299-0265 (JP); SHIGEMATSU, Akihito, Sodegaura-shi Chiba 299-0265 (JP); IIMURO, Yu, Sodegaura-shi Chiba 299-0265 (JP); NAGAKAWA, Keita, Sodegaura-shi Chiba 299-0265 (JP); CHIDA, Mitsuaki, Sodegaura-shi Chiba 299-0265 (JP); HAYASHI, Takaomi, Sodegaura-shi Chiba 299-0265 (JP); ONISHI, Hitoshi, Sodegaura-shi Chiba 299-0265 (JP); MIYASATO, Masataka, Sodegaura-shi Chiba 299-0265 (JP); FUJIYAMA, Satoko, Sodegaura-shi Chiba 299-0265 (JP)
(74) Representative: Hoffmann Eitle
(86) International application number: PCT/JP2015/077857
(87) International publication number: WO 2016/052667

(57) **Abstract**

An electrode for a lithium battery, containing a current collector (A) and a mixture layer (B) contacting the current collector (A) and including an active material (a), an organic solvent binder (b), a conduction assistant (c) comprising carbon black in which an average particle diameter of a primary particle is 1 µm or less, and a nitrogen-containing polymer (d).

## Description

### Technical Field

The present invention relates to an electrode for a lithium battery capable of being used for a cathode plate for a lithium battery, a lithium battery provided with the electrode for a lithium battery, and a paste for an electrochemical cell used for the electrode for a lithium battery.

### Background Art

A lithium battery may be used repeatedly by charging. A great concern has been focusing on the lithium battery by reason of the expectation of environmental protection and carbon dioxide reduction in recent years. Also, the lithium battery has many advantages of high energy density, light weight and long life as compared with conventional nickel-hydrogen batteries and lead-acid batteries. Thus, the lithium battery is widely utilized as a power source of electronic equipment such as portable telephones, notebook computers and electric power tools. In addition, the lithium battery has been noticed as a power source for driving of hybrid automobiles and electric automobiles.

However, safety becomes a great problem in automobiles mounted with the lithium battery. A technique for covering a cathode active material with a thermal operation protective film including a nitrogen-containing polymer is disclosed as a method for improving safety (for example, refer to Japanese Patent Application Laid-Open (JP-A) No. 2010-157512). This thermal operation protective film including a nitrogen-containing polymer is conceived to restrain thermal runaway by causing a crosslinking reaction on the occasion when an abnormal condition occurs in the lithium battery, which rises in temperature.

### SUMMARY OF INVENTION

### Technical Problem

However, in the technique described in JP-A No. 2010-157512, the safety of the lithium battery may be improved, whereas the covering of a cathode active material with the thermal operation protective film including a nitrogen-containing polymer occasionally increases battery resistance. This increase in battery resistance occasionally has a bad influence on the results of a certain battery characteristic test (such as discharge capacity and capacity maintenance factor).

The object of the present invention is to provide an electrode for a lithium battery, a lithium battery, and a paste for an electrochemical cell, which may restrain discharge capacity and capacity maintenance factor from decreasing despite the use of a nitrogen-containing polymer with an active material (a cathode active material or an anode active material). Solution to Problem

The means for solving the problem is as follows.
<1> An electrode for a lithium battery, containing a current collector (A) and a mixture layer (B) contacting the current collector (A) and including an active material (a), an organic solvent binder (b), a conduction assistant (c) containing carbon black in which an average particle diameter of a primary particle is 1 µm or less, and a nitrogen-containing polymer (d).
<2> The electrode for a lithium battery according to <1>, wherein a content of the carbon black, in which an average particle diameter of a primary particle is 1 µm or less, is 5% by mass or more with respect to a total amount of the conduction assistant (c).
<3> The electrode for a lithium battery according to <1> or <2>, wherein a content of the nitrogen-containing polymer (d) is from 0.05% by mass to 5% by mass with respect to a total amount of the mixture layer (B).
<4> A lithium battery, containing the electrode for a lithium battery according to any one of <1> to <3>.
<5> A paste for an electrochemical cell, the paste containing an active material (a), an organic solvent binder (b), a conduction assistant (c) containing carbon black in which an average particle diameter of a primary particle is 1 µm or less, and a nitrogen-containing polymer (d). Advantageous Effects of Invention

The present invention provides an electrode for a lithium battery, a lithium battery, and a paste for an electrochemical cell, which may suppress the decrease of discharge capacity and capacity maintenance factor despite the use of a nitrogen-containing polymer with an active material (a cathode active material or an anode active material).

### BRIEF DESCRIPTION OF DRAWINGS

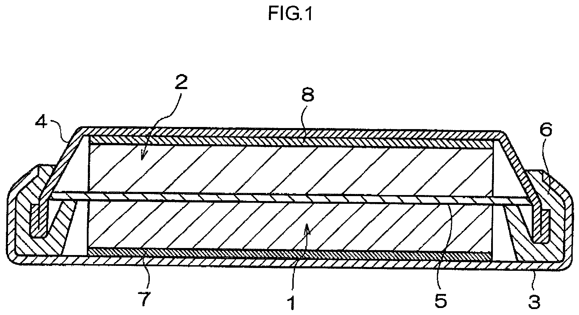

Fig. 1 is a schematic cross-sectional view of a coin-shaped battery as an example of a lithium battery of the present invention.

### DESCRIPTION OF EMBODIMENTS

A lithium battery according to the present invention is provided with an electrode for a lithium battery described below.

Here, the lithium battery generally has a structure including a cathode, an anode, a separator and a liquid electrolyte. A typical aspect of the lithium battery is such as to have a structure including a cathode plate, an anode plate, a separator, a liquid electrolyte and an exterior material, in which the cathode plate and the anode plate are opposed through the separator, and the whole battery is filled with the liquid electrolyte.

As described later, in the present invention, the electrode for the lithium battery of the present invention described below is used as the cathode and/or the anode, such as the cathode plate and/or the anode plate, of the lithium battery. The electrode for the lithium battery of the present invention may be appropriately used particularly as the cathode, such as the cathode plate.

The present invention is described below in detail.

### [Electrode for lithium battery]

An electrode for a lithium battery of the present invention contains a current collector (A), and a mixture layer (B) contacting the current collector (A) and including an active material (a), an organic solvent binder (b), a conduction assistant (c) containing carbon black in which an average particle diameter of a primary particle is 1 µm or less, and a nitrogen-containing polymer (d).

The mixture layer (B) contains at least an active material (a), an organic solvent binder (b), a conduction assistant (c), and a nitrogen-containing polymer (d).

Further, in the electrode for the lithium battery, at least part of the current collector (A) is in contact with at least part of the mixture layer (B).

The electrode for the lithium battery of the present invention may be a cathode or an anode.

That is to say, the electrode for the lithium battery of the present invention may compose a cathode plate or an anode plate in the lithium battery.

However, in an appropriate aspect of the present invention, the electrode for the lithium battery of the present invention is used as the cathode. In this case, the electrode for the lithium battery of the present invention composes the cathode plate in the lithium battery.

Each component of the electrode for the lithium battery of the present invention is described below.

The electrode for the lithium battery of the present invention is provided with at least the current collector (A) and the mixture layer (B).

### <Current collector (A)>

Various kinds of current collectors may be used as a current collector (A), and metals and alloys are ordinarily used. Specifically, examples of a cathode current collector include aluminum, nickel and SUS, and examples of an anode current collector include copper, nickel and SUS.

### <Mixture layer (B)>

A mixture layer (B) contains at least an active material (a), an organic solvent binder (b), a conduction assistant (c), and a nitrogen-containing polymer (d).

The mixture layer (B) functions as a field for causing an electrode reaction by reason of containing the active material.

The electrode for the lithium battery of the present invention may be used for both a cathode and an anode.

That is to say, in the case where the active material (a) contained in the mixture layer (B) is the cathode active material described later, the electrode for the lithium battery of the present invention functions as a cathode and may be used as a cathode plate. Meanwhile, in the case where the active material (a) contained in the mixture layer (B) is the anode active material described later, the electrode for the lithium battery of the present invention functions as an anode and may be used as an anode plate.

However, in an appropriate aspect of the present invention, the electrode for the lithium battery of the present invention is an electrode for a lithium battery such that the active material composing the mixture layer is the cathode active material, in which case the electrode for the lithium battery of the present invention is used as the cathode plate by reason of functioning as the cathode.

Incidentally, in the specification, the mixture layer is occasionally called also 'electrode mixture layer'.

### (Active material (a))

### -Cathode active material-

In the case where the electrode for the lithium battery of the present invention is the cathode, the mixture layer (B) contains the cathode active material (such as a cathode active material capable of occluding and releasing lithium ions under a high-voltage environment) as the active material (a).

Examples of the cathode active material include transition metallic oxides or transition metallic sulfides such as MoS₂, TiS₂, MnO₂ and V₂O₅, composite oxides containing lithium and transition metals such as LiCoO₂, LiMnO₂, LiMn₂O₄, LiNiO₂, LiNi_{X}Co_{(1-X)}O₂[0 < X < 1], Li_{1+α}Me_{1-α}O₂ having α-NaFeO₂ type crystal structure (Me is a transition metallic element including Mn, Ni and Co, 1.0 ≤ (1 + α)/(1 - α) ≤ 1.6), LiNiₓCo_{y}Mn_{z}O₂ [x + y + z = 1, 0 < x < 1, 0 < y < 1, 0 < z < 1] (such as LiNi_{0.33}Co_{0.33}Mn_{0.33}O₂ and LiNi_{0.5}Co_{0.2}Mn_{0.3}O₂), LiFePO₄ and LiMnPO₄, and conductive polymers such as polyaniline, polythiophene, polypyrrole, polyacethylene, polyacene, dimercaptothiadiazole and polyaniline composites. Among these, the composite oxides containing lithium and transition metals are particularly preferable.

In the case where is the anode is a lithium metal or a lithium alloy, a carbon material may be used as the cathode. Also, a mixture of the composite oxides containing lithium and transition metals and the carbon material may be used as the cathode.

The cathode active material may be used by one kind or by mixture of two kinds or more.

### -Anode active material-

In the case where the electrode for the lithium battery of the present invention is the anode, the mixture layer (B) contains the anode active material as the active material (a).

Examples of the anode active material to be used include at least one kind (singly or a mixture containing two kinds or more of these) selected from the group consisting of metallic lithium, lithium-containing alloys, metals or alloys capable of alloying with lithium, oxides capable of being doped and de-doped with lithium ions, transition metallic nitrides capable of being doped and de-doped with lithium ions, and carbon materials capable of being doped and de-doped with lithium ions.

Examples of the metals or alloys capable of alloying with lithium (or lithium ions) include silicon, silicon alloys, tin and tin alloys. Also, lithium titanate may be used.

Among these, the carbon materials capable of being doped and de-doped with lithium ions are preferable. Examples of such carbon materials include carbon black, activated carbon, graphite materials (artificial graphite and natural graphite), and amorphous carbon materials. The form of the carbon materials may be any of a fibrous form, a spherical form, a potato form and a flaky form.

Specific examples of the amorphous carbon materials include hard carbon, coke, meso carbon microbeads fired to 1500°C or less (MCMB) and Mesophase-Pitch carbon fiber (MCF).

Examples of the graphite materials include natural graphite and artificial graphite.

Graphitized MCMB and graphitized MCF are used as the artificial graphite.

Also, graphite materials containing boron may be used as the graphite materials.

Also, graphite materials coated with metals such as gold, platinum, silver, copper and tin, graphite materials coated with amorphous carbon, and a mixture of amorphous carbon and graphite may be used as the graphite materials.

These carbon materials may be used by one kind or by mixture of two kinds or more. The carbon materials are preferably carbon materials such that interplanar spacing d(002) of (002) plane particularly measured by X-ray analysis is 0.340 nm or less. Also, the carbon materials are preferably graphite with a true density of 1.70 g/cm³ or more, or highly crystalline carbon materials having a property close thereto. The use of the carbon materials described above allows energy density of the battery to be further increased.

Incidentally, in the specification, the expression 'active material' is occasionally used as a concept which comprehends the cathode active material and the anode active material.

### (Organic solvent binder (b))

Publicly known organic solvent binders may be used as the organic solvent binder (b).

Examples of the organic solvent binders include the binders described in 'Newest Lithium Ion Secondary Battery - Material Development for Safety Improvement and High Functionality', (235 pp, JOHOKIKO. CO., LTD., 2008).

Polyvinylidene fluoride is particularly preferable as the organic solvent binder (b).

### (Conduction assistant (c))

The conduction assistant (c) contains at least carbon black in which an average particle diameter of a primary particle is 1 µm or less.

The inclusion of carbon black in which an average particle diameter of a primary particle is 1 µm or less in the conduction assistant (c) allows discharge capacity and capacity maintenance factor of the lithium battery to be restrained from decreasing despite the inclusion of the nitrogen-containing polymer (d) in the mixture layer (B).

The average particle diameter of a primary particle may be measured by an electron microscope.

In the specification, 'average particle diameter' means number-average particle diameter.

The average particle diameter of a primary particle is preferably 0.5 µm or less, more preferably 0.3 µm or less, particularly preferably 0.1 µm or less.

The lower limit of the average particle diameter of a primary particle is not particularly limited but the average particle diameter of a primary particle is preferably 20 nm or more, particularly preferably 30 nm or more.

Examples of commercially available carbon black in which an average particle diameter of a primary particle is 1 µm or less include SUPER P (manufactured by TIMCAL Graphite & Carbon), TOKABLACK #4300, #4400, #4500 and #5500 (manufactured by TOKAI CARBON CO., LTD., furnace black), Printex L (manufactured by Degussa, furnace black), Raven7000, 5750, 5250, 5000ULTRAIII and 5000ULTRA, Conductex SC ULTRA and Conductex 975ULTRA, PUERBLACK100, 115 and 205 (manufactured by Columbianchemicals, furnace black), #2350, #2400B, #2600B, #3050B, #3030B, #3230B, #3350B, #3400B and #5400B (manufactured by Mitsubishi Chemical Corporation, furnace black), MONARCH1400, 1300, 900, VulcanXC-72R and BlackPearls2000 (manufactured by Cabot, furnace black), Ensaco250G, Ensaco260G, Ensaco350G and SuperP-Li (manufactured by TIMCAL), Ketjenblack EC-300J and EC-600JD (manufactured by Akzo), DENKA BLACK, DENKA BLACK HS-100 and FX-35 (manufactured by Denka Company Limited., acetylene black), and fullerene.

The conduction assistant (c) may contain other conduction assistants except 'carbon black in which an average particle diameter of a primary particle is 1 µm or less'.

The concept of 'other conduction assistants' herein comprehends carbon black in which an average particle diameter of a primary particle is more than 1 µm.

Examples of other conduction assistants include carbon materials; more specific examples thereof include graphite, carbon black in which an average particle diameter of a primary particle is more than 1 µm, and conductive carbon fiber such as carbon nanotube.

Other conduction assistants contained in the conduction assistant (c) may be only one kind or two kinds or more.

Examples of the graphite include artificial graphite, and natural graphite such as flaky graphite, massive graphite and earthy graphite, but are not limited thereto.

The content of carbon black in which an average particle diameter of a primary particle is 1 µm or less contained in the conduction assistant (c) is preferably 5% by mass or more, more preferably 20% by mass or more, far more preferably 60% by mass or more with respect to the total amount of the conduction assistant (c).

The content of carbon black in which an average particle diameter of a primary particle is 1 µm or less contained in the conduction assistant (c) may be 100% by mass with respect to the total amount of the conduction assistant (c). That is to say, the conduction assistant (c) may be composed of only carbon black in which an average particle diameter of a primary particle is 1 µm or less.

### (Nitrogen-containing polymer (d))

The nitrogen-containing polymer (d) preferably contains a polymer as a reaction product of a compound (d-1) of at least one kind selected from the group consisting of an amine compound, an amide compound, an imide compound, a maleimide compound and an imine compound, and a dione compound (d-2) except the compound (d-1).

Here, the compound (d-1) is preferably a maleimide compound.

The maleimide compound is preferably a compound of at least one kind selected from the group consisting of maleimide compounds represented by any one of formulae (1) to (4).

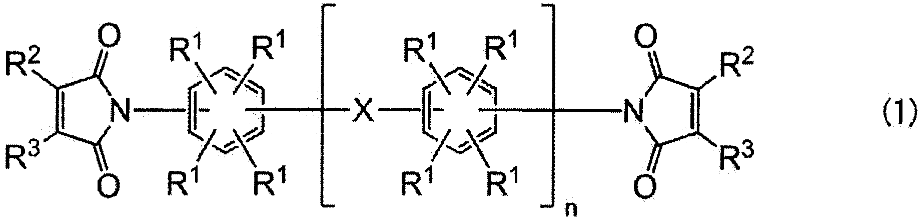

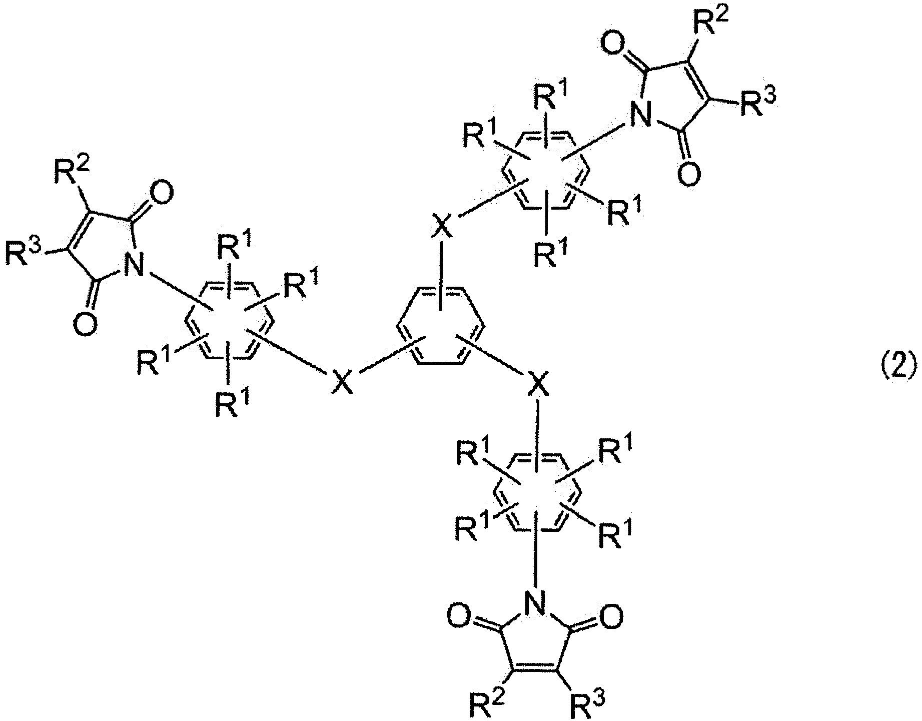

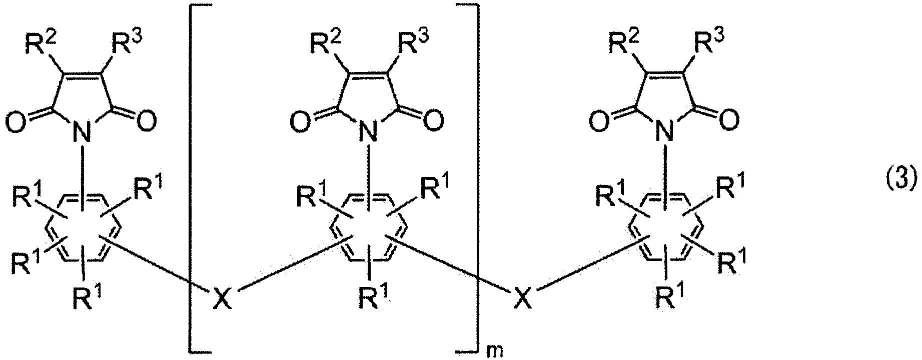

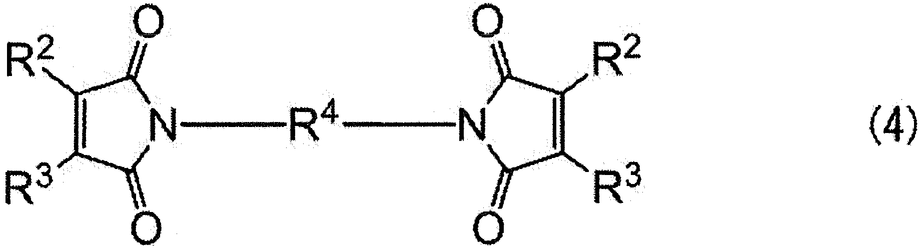

In formula (1), n is an integer of 0 or more. In formula (1), n is preferably from 1 to 10.

In formula (3), m represents a real number of 1 or more and 1000 or less. In the case of using a compound represented by formula (3) as the maleimide compound, plural compounds such that m in formula (3) is different from each other may be used.

In formulae (1) to (3), X represents -O-, -SO₂-, -S-, -CO-, -CH₂-, -C(CH₃)₂-, -C(CF₃)₂-, -CR=CR- (R is a hydrogen atom or an alkyl group), or a single bond. In formulae (1) to (3), when plural X exist in one molecule, plural X may be the same or different.

In formulae (1) to (3), R¹ represents a hydrogen atom or a substituent. In formulae (1) to (3), plural R¹ existing in one molecule may be the same or different. In formulae (1) to (3), each of R² and R³ independently represents a hydrogen atom, a halogen atom or an alkyl group with a carbon number of from 1 to 3.

In formula (4), R⁴ represents an alkylene group with a carbon number of from 1 to 10 optionally having a side chain, -NR³-, -C(OCH₂-, -CH₂OH₂-, -C(O)-, -O-, -O-O-, -S-, -S-S-, -S(O)-, -CH₂S(OCH₂-, or -SO₂-. In formula (4), each of R² and R³ independently represents a hydrogen atom, a halogen atom or an alkyl group with a carbon number of from 1 to 3.

In formulae (1) to (3), the substituent represented by R¹ is preferably a halogen atom or a hydrocarbon group.

The compound (d-1) is particularly preferably a maleimide compound of at least one kind selected from the group consisting of maleimide compounds represented by the following formula (I) or the following formula (II).

Also, the compound (d-1) is preferably a maleimide compound represented by formula (3), in which m is 1 or more and 100 or less, R¹ and R² are hydrogen atoms, and X is -CH₂-.

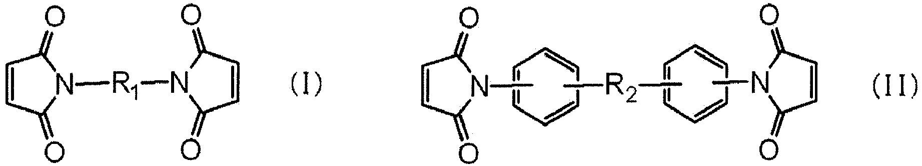

In formula (I), R₁ represents -CR₃R₄-, -NR₃-, -C(O)CH₂-, -CH₂OCH₂-, -C(O)-, -O-, -O-O-, -S-, -S-S-, -S(O)-, -CH₂S(O)CH₂-, -SO₂-, -C₆H₄-, -CH₂(C₆H₄)CH₂-, phenylene, diphenylene, substituted phenylene or substituted diphenylene.

In formula (II), R₂ represents -CR₃R₄-, -C(O)-, -C(CH₃)₂-, -O-, -O-O-, -S-, -S-S-, -SO₂-, or -S(O)-.

Incidentally, each of R₃ and R₄ in the above independently represents a hydrogen atom or an alkyl group with a carbon number of from 1 to 4.

Also, a substituent in substituted phenylene represented by R₁ is preferably a halogen atom or a hydrocarbon group.

Also, a substituent in substituted diphenylene represented by R₁ is preferably a halogen atom or a hydrocarbon group.

Above all, the compound (d-1) is particularly preferably a bismaleimide compound of at least one kind selected from the following specific examples.

That is to say, specific examples of the particularly preferable bismaleimide compound include:
1,1'-(methylenedi-4,1-phenylene)bismaleimide,
N,N'-(1,1'-biphenyl-4,4'-diyl)bismateimide,
N,N'-(4-methyl-1,3-phenylene)bismaleimide,
1,1'-(3,3'-dimethyl-1,1'-biphenyl-4,4'-diyl)bismaleimide,
N,N'-ethylenedimaleimide,
N,N'-(1,2-phenylene)dimaleimide,
N,N'-(1,3-phenylene)dimaleimide,
N,N'-ketonedimaleimide,
N,N'-methylenebismaleimide,
bismaleimide methyl ether,
1,2-bis-(maleimide)-1,2-ethanediol,
N,N'-4,4'-diphenyl ether bismaleimide and
4,4'-bis(maleimide)-diphenyl sulfone.

In addition, the dione compound (d-2) is preferably a compound of at least one kind selected from the group consisting of dione compounds represented by formula (III).

The dione compounds represented by formula (III) are barbituric acid or derivatives thereof.

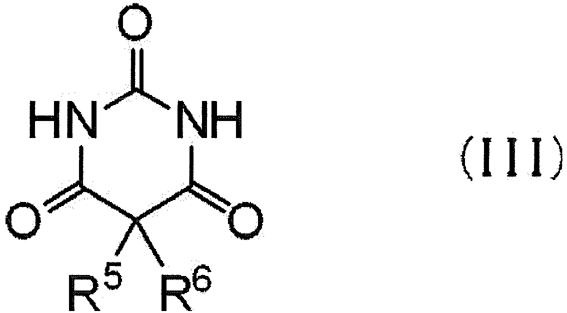

In formula (III), R₅ and R₆ represent substituents of the same kind or different kind.

Each of R₅ and R₆ preferably independently represents a hydrogen atom, a methyl group, an ethyl group, a phenyl group, an isopropyl group, an isobutyl group, an isopentyl group or 2-pentyl group.

### (Other components)

The mixture layer (B) may contain other components except the components described above.

For example, in the case where the mixture layer (B) is formed from mixture slurry, the mixture layer (B) may contain various kinds of compounding components derived from the mixture slurry.

Examples of various kinds of the compounding components derived from the mixture slurry include a thickening agent, a surfactant, a dispersing agent, a wetting agent and a defoaming agent. Specific examples of various kinds of the compounding components are described in the item of 'Forming method for mixture layer (B)'described below.

### (Forming method for mixture layer (B))

The mixture layer (B) may be produced by preparing the mixture slurry to thereafter apply and dry the mixture slurry on a current collector (A).

More specifically, the mixture layer (B) may be produced also in such a manner that the mixture slurry containing an active material (a), an organic solvent binder (b), a conduction assistant (c) and a nitrogen-containing polymer (d) is applied and dried on a current collector (A).

Further, the mixture layer (B) may be produced also in such a manner that the mixture slurry containing an active material (a), an organic solvent binder (b) and a conduction assistant (c) is applied on a current collector (A) to form a coating film and thereafter a solution containing a nitrogen-containing polymer (d) is applied and dried on the surface of this coating film. The latter aspect is also included in the present invention.

The mixture slurry preferably contains a solvent.

Examples of the solvent contained in the mixture slurry include aprotic polar solvents or mixed solutions thereof typified by N-methylpyrrolidone, dimethyl sulfoxide, propylene carbonate, dimethylformamide and γ-butyrolactone.

The mixture slurry may contain a thickening agent.

Publicly known thickening agents used for an electrochemical cell may be used as the thickening agent. Examples thereof include cellulosic polymers and ammonium salts and alkali metal salts thereof, such as carboxymethyl cellulose, methyl cellulose and hydroxypropyl cellulose; (modified) poly(meth)acrylic acid and ammonium salts and alkali metal salts thereof; polyvinyl alcohols such as (modified) polyvinyl alcohol, a copolymer of acrylic acid or acrylate and vinyl alcohol, and a copolymer of maleic anhydride, maleic acid or fumaric acid and vinyl alcohol; polyethylene glycol; polyethylene oxide; polyvinyl pyrrolidone; modified polyacrylic acid; oxidized starch; phosphoric starch; casein; and various modified starches.

The mixture slurry may contain an additive agent as required.

The additive agent is not particularly limited as far as the effects of the present invention are produced. Examples of the additive agent include a surfactant, a dispersing agent, a wetting agent and a defoaming agent.

The mixture slurry may be produced in such a manner that an active material (a), an organic solvent binder (b) and a conduction assistant (c) (and, as required, a nitrogen-containing polymer (d) and other components such as a solvent) are added to a stirrer and stirred.

Types of the stirrer are not limited on producing the mixture slurry.

Examples of the stirrer include a ball mill, a sand mill, a pigment disperser, a grinder, an ultrasonic disperser, a homogenizer, a planetary mixer, a hovert mixer and a high-speed stirrer.

An applying method and a drying method are not particularly limited on applying and drying the mixture slurry on the current collector (A).

Examples of the applying method include methods such as slot die coating, slide coating, curtain coating or gravure coating.

Examples of the drying method include drying by warm air, hot air or low-humidity air, vacuum drying, and a drying method by (far-)infrared rays. Drying time and drying temperature are not particularly limited but the drying time is ordinarily from 1 to 30 minutes and the drying temperature is ordinarily from 40°C to 180°C.

A producing method of an electrode for a lithium battery of the present invention is not particularly limited but is preferably a producing method having a process of forming the mixture layer (B) on the current collector (A) by the forming method for the mixture layer (B) described above.

It is more preferable that the preferable producing method further has a process of lowering the porosity of the mixture layer (B) by pressuring treatment while using die press and roll press after the process of forming the mixture layer (B).

### [Lithium battery]

A lithium battery of the present invention is provided with the electrode for the lithium battery described above.

In further detail, the lithium battery of the present invention is provided with a cathode and an anode, and provided with the electrode for the lithium battery described above as at least one of the cathode and the anode.

The lithium battery of the present invention may be a lithium primary battery or a lithium secondary battery, and is preferably a lithium secondary battery.

The lithium battery generally includes a cathode, an anode, a separator and a liquid electrolyte. A typical aspect of the lithium battery is such as to include a cathode plate, an anode plate, a separator, a liquid electrolyte and an exterior material, in which the cathode plate and the anode plate are opposed through the separator, and the whole battery is filled with the liquid electrolyte.

Here, the lithium battery of the present invention is provided with the electrode for the lithium battery described above in the form of the cathode and/or the anode, such as the cathode plate and/or the anode plate.

In a particularly appropriate aspect of the present invention, the cathode such as the cathode plate is an electrode adopting a cathode active material as an active material (a) among the electrodes for the lithium battery of the present invention.

### <Cathode (cathode plate)>

In the lithium battery of the present invention, the electrode for the lithium battery of the present invention described above is appropriately used as the cathode such as the cathode plate.

In this case, the lithium battery of the present invention is provided with the electrode for the lithium battery described above adopting a cathode active material as an active material (a) to function as the cathode such as the cathode plate.

### <Anode (anode plate)>

In the lithium battery of the present invention, an anode (or an anode plate) having a publicly-known conventional composition may be used as the anode such as the anode plate, and the electrode for the lithium battery according to the present invention described above may be also used.

On the other hand, in the lithium battery according to the present invention, the anode such as the anode plate may have a publicly-known conventional composition. In this case, the anode such as the anode plate may be produced by producing mixture slurry containing an anode active material to thereafter apply and dry the mixture slurry on a current collector. The preparation of the mixture slurry, and the applying method and drying method of the mixture slurry may be referred to 'Forming method for mixture layer (B)' described above. Incidentally, an aqueous solvent and a nonaqueous solvent such as polyvinylidene fluoride may be used for preparing the mixture slurry. Also, the mixture slurry may contain a conduction assistant such as (conductive) carbon black.

### <Separator>

Examples of the separator include a (micro)porous polyethylene film, a (micro)porous polypropylene film, a Teflon (registered trademark) film, a polyamide film, a polyvinyl chloride film, a polyvinylidene fluoride film, a polyaniline film, a polyimide film, a nonwoven fabric, a polyethylene terephthalate film, a polystyrene cellulose film, and a multilayer composite structure with two or more thereof combined.

The separator may be coated with another resin excellent in thermal stability.

Also, in the lithium battery, a porous heat-resistant layer containing a heat-resistant filler and an adhesive may exist between the anode plate and the separator.

Examples of the heat-resistant filler to be used include inorganic oxides such as alumina, silica, titania, zirconia, magnesia and yttria; ceramics; and glass. These may be used by one kind singly or by combination of two kinds or more.

Examples of the adhesive to be used include a nonaqueous solvent containing a nonaqueous binder such as polyvinylidene fluoride.

In the porous heat-resistant layer containing the heat-resistant filler and the adhesive, the adhesive is preferably from 0.5 to 20 parts by mass (in terms of solid content) with respect to 100 parts by mass of the heat-resistant filler.

### <Liquid electrolyte>

The liquid electrolyte is preferably a nonaqueous liquid electrolyte containing a nonaqueous solvent and an electrolyte.

Examples of the nonaqueous solvent contained in the nonaqueous liquid electrolyte include propylene carbonate, ethylene carbonate, γ-butyrolactone, dimethyl sulfoxide, dimethyl carbonate, ethylmethyl carbonate, diethyl carbonate, 1,2-dimethoxyethane, 1,2-diethoxyethane and tetrahydrofuran. The nonaqueous solvent contained in the nonaqueous liquid electrolyte may be only one kind or two kinds or more.

The electrolyte is preferably a lithium salt.

Examples of the lithium salt include LiPF₆, LiBF₄, LiClO₄, LiAsF₆, CF₃SO₃Li and (CF₃SO₂)₂N·Li. The electrolyte contained in the liquid electrolyte may be only one kind or two kinds or more.

The liquid electrolyte may contain a general additive agent as required.

### <Exterior material>

The exterior material is preferably a metallic can such as a can made of iron, stainless steel and aluminum. Also, a filmy bag obtained by laminating extra-thin aluminum with resin may be used as the exterior material.

The shape of the exterior material may be any shape of a cylindrical type, a rectangular type, a thin type and a coin type.

### <An example of lithium battery>

A coin-shaped battery as an example of a lithium battery of the present invention is hereinafter described while referring to Fig. 1.

Fig. 1 is a schematic cross-sectional view of a coin-shaped battery as an example of a lithium battery of the present invention.

In the coin-shaped battery shown in Fig. 1, a disk-shaped anode 2, a separator 5 into which a liquid electrolyte is injected, a disk-shaped cathode 1, and spacer plates 7, 8 of stainless steel or aluminum as required are stored between a cathode can 3 (also referred to as 'battery can' hereinafter) and a sealing plate 4 (also referred to as 'battery can lid' hereinafter) while laminated in this order. The cathode can 3 and the sealing plate 4 are crimped and sealed through a gasket 6.

### [Paste for electrochemical cell]

A paste for an electrochemical cell of the present invention contains an active material (a), an organic solvent binder (b), a conduction assistant (c) containing carbon black in which an average particle diameter of a primary particle is 1 µm or less, and a nitrogen-containing polymer (d).

A specific aspect of each component contained in the paste for an electrochemical cell is as described already.

A preferable aspect of the paste for an electrochemical cell of the present invention is the same as a preferable aspect of 'mixture slurry containing an active material (a), an organic solvent binder (b), a conduction assistant (c) and a nitrogen-containing polymer (d)' described in 'Forming method for mixture layer (B)'.

That is to say, the paste for an electrochemical cell of the present invention is appropriately used for producing the mixture layer (B) of the electrode for the lithium battery.

In addition, the paste for an electrochemical cell of the present invention may be also used for producing an electrode of an electrochemical cell except the lithium battery.

### Examples

The present invention is hereinafter described more specifically by examples, and is not limited to these examples.

### [Examples 1 to 5 and Comparative Example 1]

A lithium secondary battery was produced by the following processes.

### <Production of anode>

100 parts by mass of artificial graphite, 1.1 parts by mass of carboxymethyl cellulose and 1.5 parts by mass of SBR latex were kneaded by an aqueous solvent to prepare pasty anode mixture slurry.

Next, this anode mixture slurry was applied and dried to an anode collector made of beltlike copper foil with a thickness of 18 µm, and thereafter compressed by roll press to obtain a sheetlike anode composed of the anode collector and an anode active material layer. Then, an application density of the anode active material layer was 10.8 mg/cm² and a packing density thereof was 1.3 g/mL.

### <Production of cathode>

LiNi_{0.5}Mn_{0.3}Co_{0.2}O₂ (90 parts by mass), polyvinylidene fluoride (2 parts by mass), a polymer (X) solution produced in the following manner (an amount equivalent to 0.5 parts by mass of solid content), SUPER P as carbon black (registered trademark of TIMCAL Graphite & Carbon) (an average particle diameter of a primary particle is 40 nm), graphite KS-6 as another conduction assistant (manufactured by TIMCAL Graphite & Carbon) (an average particle diameter of a primary particle is 3 µm), and N-methylpyrrolidone as a solvent were kneaded to prepare pasty cathode mixture slurry. Here, the amount (part by mass) shown in the following Table 1 was used for each of SUPER P and KS-6.

Next, this cathode mixture slurry was applied and dried to a cathode collector made of beltlike aluminum foil with a thickness of 20 µm, and thereafter compressed by roll press to obtain a sheetlike cathode composed of the cathode collector and a cathode active material layer. Then, an application density of the cathode active material layer was from 19.1 to 19.8 mg/cm² and a packing density thereof was from 2.96 to 3.06 g/mL.

Here, the polymer (X) was an example of a nitrogen-containing polymer (d) and the polymer (X) solution was an NMP solution of the polymer (X).

### -Production of polymer (X) solution-

An SUS autoclave with an internal volume of 190 mL and a stirrer were sufficiently dried.

5.82 g of N,N'-diphenylmethane bismaleimide (manufactured by Daiwa Kasei Industry Co., Ltd.) (hereinafter referred to as simply 'maleimide') as a maleimide compound, in which R₂ in formula (II) is -CH₂-, and 1.01 g of barbituric acid (manufactured by Ruicheng County Xinyu chemical plant) as a dione compound, in which both R₅ and R₆ in formula (III) are hydrogen atoms, were put in the autoclave after being dried (maleimide : barbituric acid = 2 : 1 (mol)).

129.82 g of N-methyl-2-pyrrolidone (NMP) was added thereto to seal the vessel (total mass is 136.65 g, solid content concentration is 5% by mass, occupancy rate in the vessel is 70% by volume). Nitrogen gas was introduced into the sealed vessel until pressure in the vessel became 5.0 MPa to subsequently repeat the process of returning the pressure in the vessel to normal pressure five times. Thus, the inside of the vessel was substituted with nitrogen.

Next, the autoclave was placed in a heat block and heated while stirred at 120 rpm so that the internal temperature was 100°C.

The point of time when the internal temperature reached 100°C was regarded as a reaction starting point to continue stirring for 24 hours while keeping the internal temperature at 100°C. After finishing the reaction, the vessel was cooled to obtain a dark brown polymer (X) solution.

### -Analysis of polymer (X) solution-

The obtained polymer (X) solution was analyzed by high-performance liquid chromatography (HPLC) at water (0.1 % by mass-phosphoric acid aqueous solution)/acetonitrile mixture base.

A solution, such that a mixed solution of 600 mg of the polymer (X) solution and 800 mg of an internal standard substance dilution (N-phenylsuccinimide/acetonitrile = 10 mg/g) was diluted with acetonitrile until the volume became 50 mL, was used as a sample solution of HPLC.

'Atlantis T3' (5 µm, 4.6×250 mm) manufactured by Nihon Waters K.K. was used as a column of HPLC.

0.1% by mass-phosphoric acid aqueous solution (hereinafter referred to as simply 'water') and acetonitrile was used as an eluant of HPLC.

The gradient conditions of HPLC were the conditions of continuously changing volume ratio (water/acetonitrile) from 99/1 to 20/80 over 25 minutes, subsequently retaining the volume ratio (water/acetonitrile) at 20/80 for 10 minutes, and subsequently changing the volume ratio (water/acetonitrile) from 20/80 to 99/1 over 3 minutes.

A UV detector manufactured by SHIMADZU CORPORATION was used as the detector. The detection wavelength was 210 nm for 4.83 minutes from the start of analysis and 230 nm thereafter.

As a result of HPLC in the above, maleimide (25.5 min), barbituric acid (4.6 min) and internal standard substance (17.2 min) were each detected. As a result of quantifying, the degree of conversion of maleimide and barbituric acid was 94 mol % and 99 mol % respectively. Thus, it was confirmed that the polymer (X) was produced as a reaction product between maleimide and barbituric acid in the production of the polymer (X) solution.

### <Preparation of nonaqueous liquid electrolyte>

Ethylene carbonate (EC) and methylethyl carbonate (EMC) were mixed as a nonaqueous solvent at a ratio of 30 : 70 (volume ratio) respectively to obtain a mixed solvent.

LiPF₆ as an electrolyte was dissolved in the obtained mixed solvent so that the electrolyte concentration in a nonaqueous liquid electrolyte obtained finally was 1 mol/l to obtain a nonaqueous liquid electrolyte.

### <Production of coin-shaped battery>

The anode and the cathode described above were stamped into a disk shape with a diameter of 14.5 mm and 13 mm respectively to obtain coin-shaped electrodes (anode and cathode). Also, a microporous polyethylene film with a thickness of 20 µm was stamped into a disk shape with a diameter of 16 mm to obtain a separator.

The obtained coin-shaped anode, separator and coin-shaped cathode were laminated in a stainless-steel battery can (2032 size) in this order to inject 40 µL of the nonaqueous liquid electrolyte, in which the separator, the cathode and the anode were immersed.

In addition, a plate made of aluminum (a thickness of 1.2 mm, a diameter of 16 mm) and a spring were mounted on the cathode to seal a battery by crimping a battery can lid through a gasket made of polypropylene, and produce a coin-shaped lithium secondary battery with a diameter of 20 mm and a height of 3.2 mm (hereinafter referred to as 'test battery') having a composition shown in Fig. 1.

Each measurement was performed for the obtained coin-shaped battery (test battery).

### [Evaluation method]

### <Resistance characteristics of battery: load characteristic and direct current resistance>

In a constant temperature bath (25°C), a process of charging the coin-shaped battery up to 4.2 V at a current value of 0.2 C and CC-CV, and then CC-discharging at a current value of 0.2 C was repeated four times. The discharge capacity in CC-discharging at the fourth time was regarded as a reference value of the capacity maintenance factor described later.

Here, 'CC' means Constant Current and 'CV' means Constant Voltage (similarly hereinafter).

Subsequently, the coin-shaped battery after charging and discharging was charged up to 4.2 V at a current value of 0.2 C and CC-CV, and then CC-discharged at a current value of 1 C, and charged up to 4.2 V again at a current value of 0.2 C and CC-CV, and then CC-discharged at a current value of 2 C.

The discharge capacity [mAhg⁻¹] in CC-discharging at a current value of 1 C and the discharge capacity [mAhg⁻¹] in CC-discharging at a current value of 2 C are shown, respectively, in the following Table 1 ('1C' and '2C' in discharge capacity [mAhg⁻¹]).

In addition, values such that these discharge capacities (1C, 2C) were divided by 'the discharge capacity in CC-discharging at the fourth time' described above, and multiplied by 100 were regarded as capacity maintenance factor [%] (1C, 2C) respectively. The results are shown in the following Table 1.

**[Table 1]**

| | CONDUCTION ASSISTANT (PART BY MASS) | | CAPACITY MAINTENANCE FACTOR [%] | | DISCHARGE CAPACITY [mAhg⁻¹] | |
|---|---|---|---|---|---|---|
| | SUPER P | KS-6 | 1C | 2C | 1C | 2C |
| EXAMPLE 1 | 4 | 0 | 92 | 70 | 152 | 116 |
| EXAMPLE 2 | 4 | 2 | 93 | 72 | 148 | 115 |
| EXAMPLE 3 | 2 | 1 | 92 | 64 | 148 | 104 |
| EXAMPLE 4 | 2 | 4 | 92 | 63 | 148 | 102 |
| EXAMPLE 5 | 1 | 2 | 90 | 57 | 146 | 92 |
| COMPARATIVE EXAMPLE 1 | 0 | 4 | 83 | 38 | 134 | 61 |

As shown in Table 1, Examples 1 to 5 using carbon black in which an average particle diameter of a primary particle is 1 µm or less, were superior in both capacity maintenance factor and discharge capacity to Comparative Example 1 not using carbon black in which an average particle diameter of a primary particle is 1 µm or less.

The entire disclosure of Japanese Patent Application No. 2014-201777 is incorporated into the specification by reference.

All literatures, patent applications and technical standards described in the specification are incorporated into the specification by reference to the same degree as the case where the incorporation of individual literature, patent application and technical standard by reference is described specifically and individually.

## Claims

1. An electrode for a lithium battery, comprising:
a current collector (A); and
a mixture layer (B) contacting the current collector (A) and comprising an active material (a), an organic solvent binder (b), a conduction assistant (c) comprising carbon black in which an average particle diameter of a primary particle is 1 µm or less, and a nitrogen-containing polymer (d).

2. The electrode for a lithium battery according to claim 1, wherein a content of the carbon black, in which an average particle diameter of a primary particle is 1 µm or less, is 5% by mass or more with respect to a total amount of the conduction assistant (c).

3. The electrode for a lithium battery according to claim 1 or 2, wherein a content of the nitrogen-containing polymer (d) is from 0.05% by mass to 5% by mass with respect to a total amount of the mixture layer (B).

4. A lithium battery, comprising the electrode for a lithium battery according to any one of claims 1 to 3.

5. A paste for an electrochemical cell, the paste comprising an active material (a), an organic solvent binder (b), a conduction assistant (c) comprising carbon black in which an average particle diameter of a primary particle is 1 µm or less, and a nitrogen-containing polymer (d).
